# EUROPÄISCHE PATENTANMELDUNG

(11) **EP 1 087 164 A1**
(43) Veröffentlichungstag der Anmeldung: **28.03.2001**
(21) Anmeldenummer: 00250287.0
(22) Anmeldetag: 29.08.2000
(51) Int. Cl.: F16L 13/14, B21D 39/04

(54) **Pressgerät**

(30) Priorität: 27.09.1999 DE 19948107
(71) Anmelder: Mapress GmbH & Co. KG, 40764 Langenfeld (DE)
(72) Erfinder: Speckmeyer, Jens, 45475 Mülheim (DE)
(74) Vertreter: Meissner, Peter E., Dipl.-Ing.

(57) **Zusammenfassung**

Die Erfindung betrifft ein Preßgerät mit mindestens zwei Preßbacken, die eine Preßkontur mit einem in Umfangsrichtung verlaufendem Preßbereich für den radial vorstehenden Ringwulst eines Preßfittings und einem im Abstand daneben verlaufenden, radial nach innen vorstehenden Preßsteg aufweisen. Erfindungsgemäß ist symmetrisch zum Preßsteg (5) je ein rechts und links in Umfangsrichtung verlaufender Preßbereich (2, 2') für den radial vorstehenden Ringwulst (4, 4') eines Preßfittings (3) angeordnet.

## Beschreibung

Die Erfindung betrifft ein Preßgerät mit mindestens zwei Preßbacken gemäß dem Oberbegriff des Patentanspruches 1.

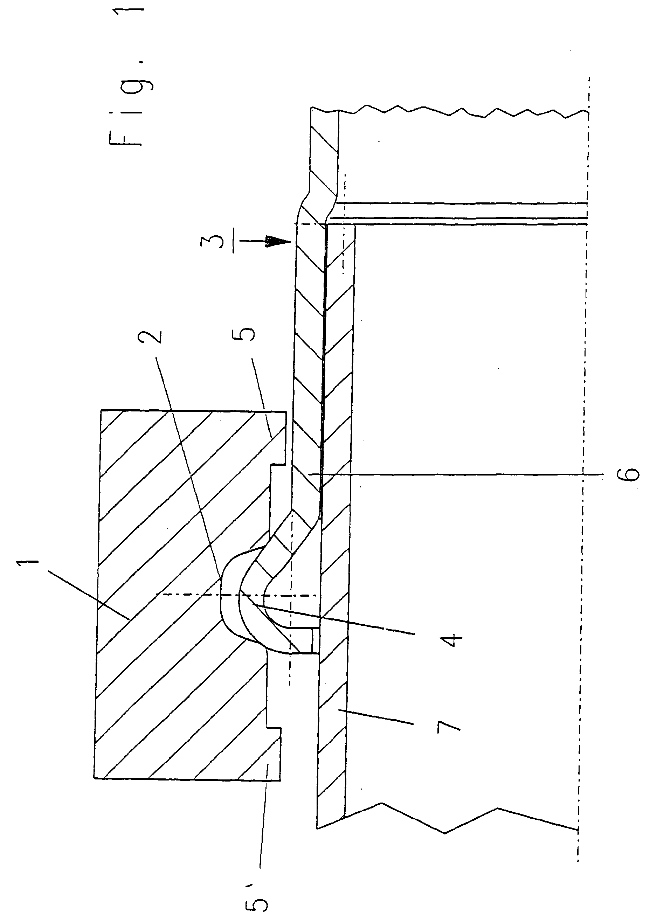

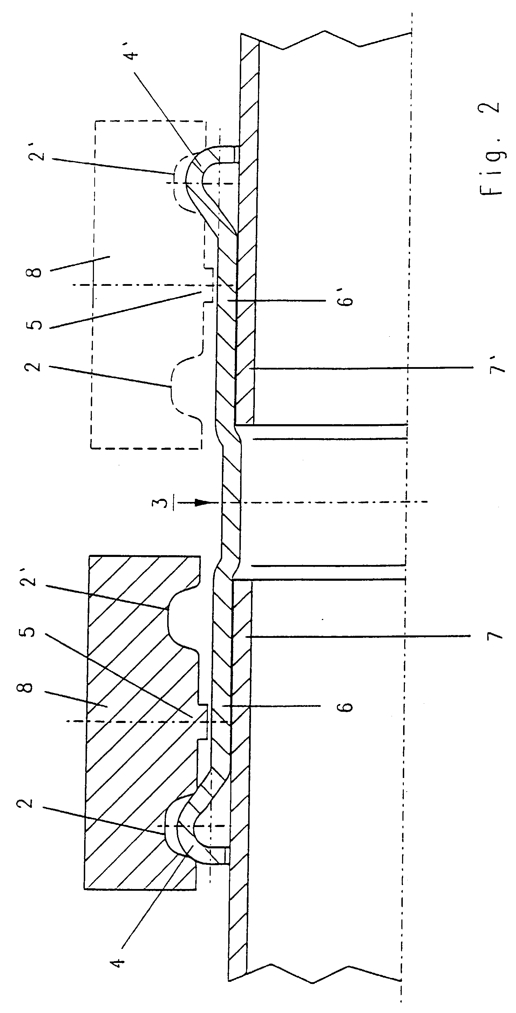

Die Verwendung eines Preßgerätes mit mindestens zwei Preßbacken für die Verpressung von Preßfittings mit einem darin eingeschobenen Leitungsrohr ist bekannt (siehe Firmenprospekt mapress mannesmann pressfitting-system Trinkwasserinstallation mit Rohren und Rohrverbindungen aus nichtrostenden Stählen, 7/97). Üblicherweise ist die Preßbacke mit zwei Preßstegen versehen, die rechts und links im Abstand zum Preßbereich für den Ringwulst angeordnet sind (siehe Abb. 2 des Firmenprospektes). Dies hat den Vorteil, daß der Installateur die Preßbacke nicht zu drehen braucht, wenn er beispielsweise bei einer Muffe (siehe Abb. 1 des Firmenprospektes) zwei spiegelbildlich angeordnete Bereiche verpressen muß. Nachteilig bei dieser Anordnung ist, daß insbesondere bei einer in Umfangsrichtung gesehen mehr ovalen oder nahezu runden Verpreßkontur der an der Verpressung nicht beteiligte Preßsteg auf das Leitungsrohr aufsetzt und dieses etwas niederdrückt. Dadurch wird der benachbart liegende Bereich des Ringwulstes mit dem eingelegten Dichtring entlastet und es können somit Undichtigkeiten im Laufe der betrieblichen Nutzung entstehen.

Bekannt ist aus der DE 295 21 410 U1, nur einen Preßsteg vorzusehen. Dies hat wiederum den Nachteil, daß der Installateur bei spiegelbildlich angeordneten Verpreßbereichen die Preßbacke aus dem Preßgerät herausnehmen, drehen und wiedereinsetzen muß.

Aufgabe der Erfindung ist es, ein Preßgerät mit mindestens zwei Preßbacken anzugeben, das die genannten Nachteile nicht aufweist.

Diese Aufgabe wird mit einem Gerät mit den Merkmalen des Oberbegriffes in Verbindung mit den Merkmalen im kennzeichnenden Teil des Patentanspruches 1 gelöst.

Nach der Lehre der Patentanmeldung ist symmetrisch zum Preßsteg je ein rechts und links in Umfangsrichtung verlaufender Preßbereich für den radial vorstehenden Ringwulst eines Preßfittings angeordnet. Der Vorteil dieser Anordnung ist darin zu sehen, daß auch bei einer ovalen oder nahezu runden Verpreßkontur ein Aufsetzen auf das Leitungsrohr nicht mehr stattfindet und die einfache Handhabung für den Installateur erhalten bleibt.

In der Zeichnung wird anhand eines Ausführungsbeispieles das erfindungsgemäß ausgebildete Preßgerät näher erläutert.

Es zeigen:
- Fig. 1: in einem hälftigen Längsschnitt ein bekanntes Preßgerät mit einer Preßbacke, die zwei Preßstege aufweist.
- Fig. 2: in einem hälftigen Längsschnitt ein erfindungsgemäß ausgebildetes Preßgerät.

Fig. 1 zeigt in einem hälftigen Längsschnitt ein bekanntes Preßgerät. Es besteht aus zwei Preßbacken, wobei hier nur eine Preßbacke 1 dargestellt ist. In bekannter Weise weist die Preßkontur einen Preßbereich 2 für den radial vorstehenden Ringwulst 4 eines Preßfittings 3 auf sowie rechts und links davon im Abstand dazu je einen Preßsteg 5, 5', um den zylindrisch ausgebildeten Abschnitt 6 mit dem hier eingeschobenen Leitungsrohr 7 verpressen zu können. Der zweite Preßsteg 5' ist dafür vorgesehen, um ohne die Preßbacke 1 umstecken zu müssen, auch ein spiegelbildlich liegender Ringwulst 4' verpreßt werden kann (siehe Fig. 2 rechte Bildhälfte).

Fig. 2 zeigt ebenfalls in einem hälftigen Längsschnitt ein erfindungsgemäß ausgebildetes Preßgerät, wobei für gleiche Teile gleiche Bezugszeichen verwendet worden sind. Die hier dargestellte Preßbacke 8 zeichnet sich dadurch aus, daß nur ein Preßsteg 5 vorgesehen ist, aber dafür zwei Preßbereiche 2, 2' zur Verpressung des Ringwulstes 4 des Preßfittings 3. Der Vorteil dieser Anordnung ist darin zu sehen, daß auf der nicht durch den Preßfitting abgedeckten Seite des eingeschobenen Leitungsrohres 7 kein störender Vorsprung der Preßbacke 8 vorhanden ist. In der rechten Bildhälfte ist dargestellt, daß die erfindungsgemäß ausgebildete Preßbacke 8 ohne Umstecken auch für die Verpressung des spiegelbildlich liegenden Ringwulstes 4' eingesetzt werden kann.

## Patentansprüche

1. Preßgerät mit mindestens zwei Preßbacken, die eine Preßkontur mit einem in Umfangstichtung verlaufendem Preßbereich für den radial vorstehenden Ringwulst eines Preßfittings und einem im Abstand daneben verlaufenden, radial nach innen vorstehenden Preßsteg aufweisen,
dadurch gekennzeichnet,
daß symmetrisch zum Preßsteg (5) je ein rechts und links in Umfangsrichtung verlaufender Preßbereich (2, 2') für den radial vorstehenden Ringwulst (4, 4') eines Preßfittings (3) angeordnet ist.
